# FASCICULE DE BREVET EUROPEEN

(11) **EP 3 359 323 B1**
(45) Date de publication et mention de la délivrance du brevet: **21.08.2019**
(21) Numéro de dépôt: 16794371.1
(22) Date de dépôt: 07.10.2016
(51) Int. Cl.: B23H 9/10, B23H 3/04

(54) **OUTILLAGE POUR L'USINAGE D'ALVEOLES DE DISQUES MULTI-ETAGES PAR PECM, ENSEMBLE ET MACHINE D'USINAGE ELECTROCHIMIQUE COMPORTANT CET OUTILLAGE, ET PROCEDE UTILISANT CET OUTILLAGE.**
WERKZEUG ZUR BEARBEITUNG VON BOHRUNGEN IN MEHRSTUFIGEN PLATTEN DURCH PECM, ELEKTROCHEMISCHE BEARBEITUNGSANORDNUNG UND MASCHINE MIT DIESEM WERKZEUG SOWIE VERFAHREN UNTER VERWENDUNG DIESES WERKZEUGES
TOOL FOR MACHINING WELLS IN MULTI-STAGE DISCS BY PECM, ELECTROCHEMICAL MACHINING ASSEMBLY AND MACHINE INCLUDING SAID TOOL, AND METHOD USING SAID TOOL

(30) Priorité: 07.10.2015 FR 1559541
(43) Date de publication de la demande: 15.08.2018
(73) Titulaire: Safran Aircraft Engines, 75015 Paris (FR); Pemtec, 57603 Forbach Cedex (FR)
(72) Inventeur: LECOMTE, Janvier, 77550 Moissy-Cramayel Cedex (FR); RANCIC, Mickaël, 77550 Moissy-Cramayel Cedex (FR); TALLON, Sophie, 77550 Moissy-Cramayel Cedex (FR); KRAFT, Juri, 66787 Differten (DE); GRUTZMACHER, Andreas, 66740 Saarlouis Picard (DE)
(74) Mandataire: Cabinet Beau de Loménie
(86) Numéro de dépôt international: PCT/FR2016/052600
(87) Numéro de publication internationale: WO 2017/060651

(56) Documents cités:
- FR-A1- 3 006 925
- US-A- 3 288 699
- US-A1- 2012 213 639
- US-B2- 8 057 645

## Description

### DOMAINE DE L'INVENTION

La présente invention concerne un outillage pour réaliser des alvéoles de disques multi-étagé par usinage électrochimique, un ensemble et une machine comportant un tel outillage, et un procédé utilisant un tel outillage.

### ETAT DE LA TECHNIQUE ANTERIEURE

L'usinage de disques multi-étagé est généralement fait par brochage ou fraisage puis rayonnage pour l'étage de diamètre le plus important, et par fraisage puis rayonnage (hors brochage) pour usiner l'étage de diamètre le plus faible. Pour chaque étage, plusieurs opérations d'usinage sont nécessaires notamment une opération d'ébavurage est nécessaire après chaque opération de brochage ou de fraisage. Ces solutions techniques ont l'inconvénient de présenter un coût d'opérations et un temps de réalisation élevé, ainsi qu'un risque de bris des outils de fraisage.

Une autre technique connue, permettant de pallier ces inconvénients, consiste à utiliser l'usinage électrochimique pulsé (PECM en anglais). Le document FR 3 006 925 décrit un dispositif et un procédé utilisant cette solution technique pour la réalisation d'alvéoles sur une pièce mono-étagée.

### PRESENTATION DE L'INVENTION

Aussi, l'objectif de l'invention est de remédier aux inconvénients des procédés antérieurs et de permettre d'usiner les différents étages d'un disque multi-étagé de manière relativement simple, en un temps relativement court et en utilisant un outillage et une machine de coût modéré.

Cet objectif est atteint tout d'abord grâce à un outillage pour réaliser des alvéoles d'un disque multi-étagé par usinage électrochimique, comprenant au moins une première et une deuxième couronnes coaxiales suivant un axe de disque, configurées pour servir de cathodes, chaque couronne ayant une périphérie intérieure comportant une pluralité de saillies radiales d'usinage, les première et deuxième couronnes étant fixées de manière rigide l'une à l'autre.

Par « fixées de manière rigide l'une à l'autre », on comprend que les première et deuxième couronnes sont fixées de sorte que, lorsque l'outillage se déplace, les première et deuxième couronnes se déplacent simultanément et de manière identique. La forme des saillies radiales d'usinage, en vue axiale selon l'axe de disque, correspond à la forme des alvéoles devant être réalisées sur le disque multi-étagé. Par ailleurs, le diamètre interne de la première couronne est environ égal au diamètre externe d'un premier étage du disque, et le diamètre interne de la deuxième couronne est environ égal au diamètre externe d'un deuxième étage du disque. Par conséquent, lorsque l'outillage se déplace suivant l'axe de disque multi-étagé, la première couronne servant de cathode permet de réaliser les alvéoles d'un premier étage du disque par usinage électrochimique, et la deuxième couronne servant de cathode permet de réaliser les alvéoles d'un deuxième étage du disque par usinage électrochimique.

L'outillage permet d'usiner les alvéoles de chaque étage du disque multi-étagé par deux séquences d'usinage électrochimique successives ou simultanées, réalisées avantageusement au moyen de l'outillage unique défini précédemment.

Dans certains modes de réalisation, les saillies radiales présentent, en vue axiale selon l'axe de disque, une forme de champignon.

En cours d'usinage, suivant le procédé PECM, on injecte un électrolyte qui s'écoule le long desdites saillies en forme de champignon ; simultanément, on fait circuler un courant électrique d'une anode (dans le cas présent, le disque multi-étagé) à la cathode ; le passage de ce courant arrache des atomes métalliques à la partie du disque située en face de la cathode, de sorte que les alvéoles de chaque étage du disque multi-étagé présentent, après usinage, la forme de champignon définie par les saillies de la couronne. Par ailleurs, les saillies radiales peuvent avoir une forme de champignon dont les dimensions diffèrent entre la première et la deuxième couronne. De plus, les saillies radiales ne sont pas limitées à cette forme et peuvent être différentes selon la forme souhaitée des alvéoles de chaque étage du disque multi-étagé après usinage.

Dans certains modes de réalisation, l'outillage comprend en outre un capot dans lequel sont fixées les couronnes, ledit capot étant agencé autour des couronnes et configuré pour empêcher des projections radiales de l'électrolyte ruisselant autour des saillies.

Le capot constitue une enveloppe externe de l'outillage, renfermant le disque à usiner, les couronnes et l'électrolyte ruisselant le long des couronnes. Par ailleurs, les couronnes étant fixées sur une périphérie interne du capot, lorsque que ce dernier se déplace, les couronnes se déplacent simultanément. Par ailleurs, le capot comporte une pluralité de passages pour permettre l'injection et l'évacuation de l'électrolyte.

Dans certains modes de réalisation, le capot comporte au moins deux parties isolées électriquement l'une de l'autre par un élément isolant, sur lesquelles sont fixées respectivement la première et la deuxième couronne.

Grâce à cela, l'outillage permet d'usiner le premier et le deuxième étages du disque avec des paramètres électriques différents, et généralement pas en même temps. L'élément isolant est disposé de sorte à être intercalé entre les deux parties de capot, et à être situé dans une zone entre la première couronne et la deuxième couronne suivant l'axe de disque. Dans un mode de mise en oeuvre, lorsqu'une des couronnes est en cours d'usinage, donc alimentée électriquement, une autre des couronnes n'est pas alimentée électriquement. Ainsi, un usinage non souhaité de certaines zones du disque est évité.

Dans certains modes de réalisation, l'outillage comprend en outre au moins deux protecteurs mobiles solidaires dudit capot, comportant des passages d'injection de fluide pour injecter un électrolyte sur les saillies, lesdits deux protecteurs mobiles étant respectivement adjacents auxdites première et deuxième couronnes.

Les au moins deux protecteurs mobiles sont généralement fixés sur la périphérie interne du capot, et possèdent sur leur périphérie interne une pluralité de saillies radiales de forme identique à celle des première et deuxième couronnes respectivement. Lorsque l'outillage se déplace, les couronnes se déplacent de sorte que l'une d'elles usine un étage du disque, et le protecteur isolant adjacent à ladite couronne se déplace également en pénétrant dans l'alvéole venant d'être usiner. Le protecteur mobile permet ainsi d'empêcher des projections d'électrolyte sur des portions d'alvéole déjà usinées, évitant par conséquent un usinage non souhaité desdites portions d'alvéole.

Le présent exposé concerne également un ensemble comportant l'outillage, le disque multi-étagé, et au moins un protecteur fixe configuré pour être fixé sur le disque et protéger le disque de l'électrolyte.

Le protecteur fixe est un élément non conducteur permettant de protéger le disque de l'électrolyte, évitant un usinage non souhaité des surfaces adjacentes aux étages du disque devant être usinés. Le protecteur fixe peut permettre en outre l'évacuation de l'électrolyte et de la matière dissoute après usinage en dirigeant l'électrolyte vers les passages d'évacuation du capot.

Le présent exposé concerne également une machine d'usinage électrochimique comportant un support permettant la fixation d'un disque multi-étagé, l'outillage, un actionneur capable d'opérer des déplacements relatifs de l'outillage par rapport au disque fixé sur le support, le disque étant au moins en partie à l'intérieur de l'outillage ; un circuit d'électrolyte et un circuit électrique, la machine étant configurée pour permettre un usinage d'un premier étage du disque à l'aide de la première couronne, et un usinage d'un deuxième étage du disque à l'aide de la deuxième couronne par usinage électrochimique, au cours desdits déplacements.

Le présent exposé concerne également un procédé de réalisation d'alvéoles d'un disque multi-étagé par usinage électrochimique utilisant l'outillage, le procédé comportant les étapes suivantes :
a) Positionner l'outillage de telle sorte qu'une première desdites au moins deux couronnes soit au voisinage d'un premier étage du disque à usiner
b) Usiner le premier étage du disque par usinage électrochimique en déplaçant l'outillage par rapport au disque selon l'axe de disque.
c) Positionner l'outillage de telle sorte qu'une deuxième desdites au moins deux couronnes soit au voisinage d'un deuxième étage du disque à usiner.
d) Usiner le deuxième étage du disque par usinage électrochimique en déplaçant l'outillage par rapport au disque selon l'axe de disque.

Ce procédé permet la réalisation de l'ensemble de ces étapes sans nécessité de changer d'outil. Cela engendre un gain de temps de réalisation.

Dans certains modes de réalisation, le procédé comporte en outre les étapes suivantes :
- Couper l'alimentation électrique et en électrolyte de la deuxième couronne, lorsque la première couronne est en cours d'usinage pendant l'étape b).
- Couper l'alimentation électrique et en électrolyte de la première couronne, lorsque la deuxième couronne est en cours d'usinage pendant l'étape d).

Ces étapes permettent d'éviter un usinage non souhaité de certaines zones du disque, lorsque l'une des couronnes est en cours d'usinage.

Dans certains modes de réalisation, à l'étape d'usinage b) et/ou d), le déplacement relatif de l'outillage par rapport au disque est un mouvement hélicoïdal autour de l'axe de disque.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une vue en perspective partielle d'un disque multi-étagé.
- les figures 2A et 2B sont des représentations simplifiées d'un disque, respectivement avant usinage des alvéoles (figure 2A), et après usinage des alvéoles (figure 2B).
- la figure 3 représente une vue en coupe de de l'outillage pour réaliser des alvéoles d'un disque multi-étagé.
- la figure 4 représente plus en détail une portion d'une couronne et d'un protecteur isolant.
- la figure 5 représente schématiquement la machine à usinage électrochimique.

### DESCRIPTION DETAILLEE D'EXEMPLES DE REALISATION

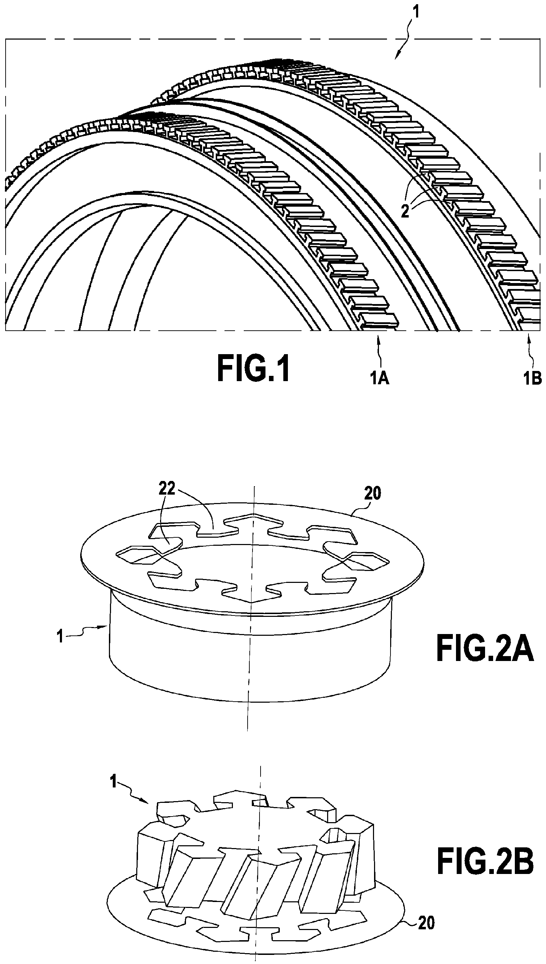

La figure 1 représente une vue en perspective d'un disque multi-étagé après usinage, comportant ici un étage 1A de diamètre plus faible, et un étage 1B de diamètre plus important, chaque étage présentant une pluralité d'alvéoles 2. Compte tenu de la structure d'un disque de ce type, on comprend qu'il est difficile de réaliser les alvéoles d'un étage sans endommager l'autre étage par les techniques usuelles (brochage, fraisage).

Les figures 2A et 2B sont des représentations simplifiées d'un étage d'un disque 1 avant usinage des alvéoles 2 (figure 2A), et après usinage des alvéoles 2 (figure 2B), par un procédé connu utilisant une méthode d'usinage électrochimique PECM (« Pulsed Electrical Chemical Machining »). La couronne 20, servant de cathode, est parcourue par un courant pulsé, et un électrolyte sous pression circule entre la couronne 20 et le disque 1 à usiner. Initialement, la couronne 20 est en position haute, c'est-à-dire au-dessus du disque 1 (figure 2A). La couronne 20 est ensuite translatée en direction du disque 1 selon l'axe de ce dernier, en adoptant une trajectoire hélicoïdale par rapport à ce dernier. Lorsque la couronne est au niveau du disque, des impulsions de courant successives sont déclenchées dans l'électrolyte. La couronne 20 servant de cathode, et le disque 1 servant d'anode, une dissolution ionique se produit. Après usinage, la couronne 20 se trouve en position basse, c'est-à-dire au-dessous du disque 1 (figure 2B).

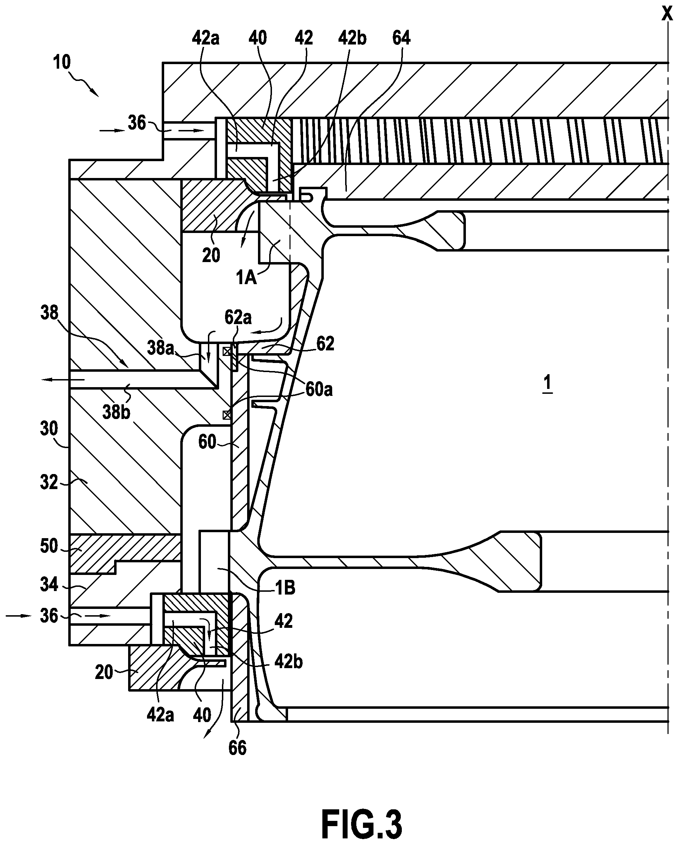

Ce principe d'usinage est utilisé par un outillage 10, conforme à l'invention, qui est illustré sur la figure 3. Cet outillage permet d'usiner successivement l'étage 1B de diamètre plus important du disque 1, et l'étage 1A de diamètre plus faible du disque 1. La figure 3 représente une vue en coupe d'une moitié de l'outillage 10, qui est agencé de manière axisymétrique autour de l'axe des couronnes (axe X). Les couronnes 20 et le disque 1 sont également agencés de manière axisymétrique autour de ce même axe X. L'outillage 10 est représenté disposé autour du disque 1, et configuré pour pouvoir se déplacer par rapport à ce dernier, selon l'axe X.

L'outillage 10 comporte notamment un capot 30, également agencé de manière axisymétrique autour de l'axe X, et enveloppant le disque 1. Une première et une deuxième couronne 20 sont fixées sur une périphérie interne du capot 30. Par conséquent, lorsque l'outillage est en mouvement, le déplacement du capot 30 entraîne un déplacement simultané des deux couronnes 20. La première couronne permet ainsi d'usiner le premier étage 1A du disque 1, et la deuxième couronne permet d'usiner le deuxième étage 1B du disque 1.

Le capot 30 dispose, sur toute sa périphérie, d'une pluralité de passages d'injection 36 par lesquels l'outillage est alimenté en électrolyte, et d'une pluralité de passages d'évacuation 38 par laquelle l'électrolyte est évacué. Chaque passage d'évacuation 38 comporte une gorge 38a et un perçage d'évacuation 38b. La gorge 38a est disposée dans une direction parallèle à l'axe X de l'outillage, le perçage d'évacuation 38b est disposée dans une direction radiale perpendiculaire à l'axe X. La circulation de l'électrolyte est représentée par des flèches sur la figure 3. Le capot 30 comporte une première partie 32, et une deuxième partie 34. Les parties 32 et 34 sont isolées électriquement l'une de l'autre par un élément isolant 50, ayant une forme annulaire, et étant intercalé entre lesdites parties 32 et 34. La première couronne étant fixée sur la première partie de capot 32, et la deuxième couronne étant fixée sur la deuxième partie de capot 34, les deux couronnes sont par conséquent isolées électriquement l'une de l'autre, grâce à l'élément isolant 50. Ainsi, lorsque l'une des deux couronnes est en cours d'usinage, et donc alimentée en courant, l'autre couronne peut ne pas être alimentée en courant, évitant dans ce cas un usinage non souhaité de certaines zones du disque 1.

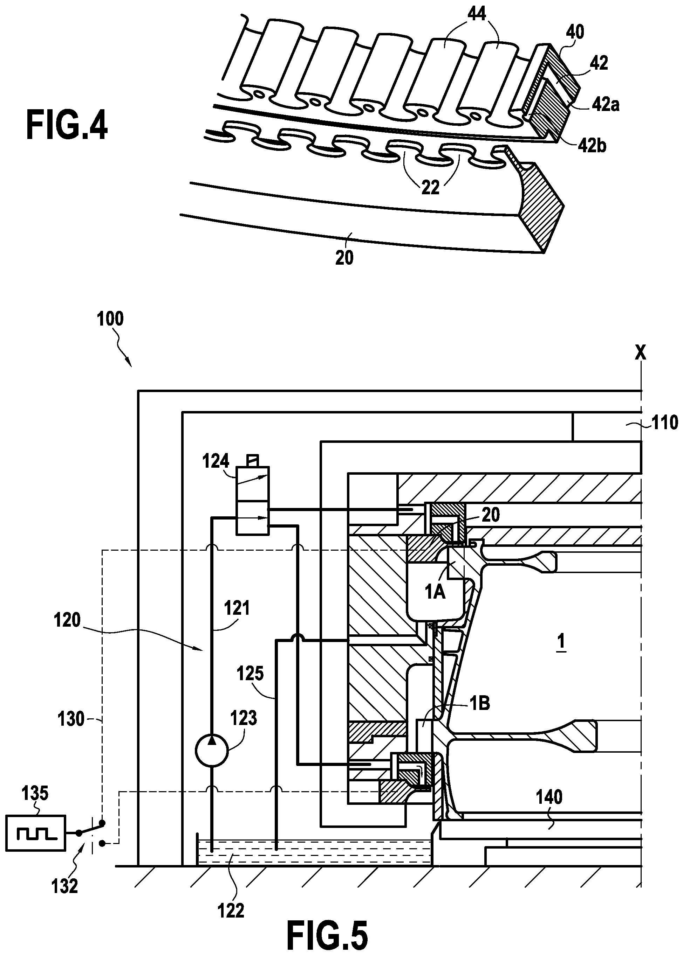

L'outillage 10 comporte en outre deux protecteurs mobiles 40, également fixés sur la périphérie interne du capot 30. Par conséquent, lorsque l'outillage est en mouvement, le déplacement du capot 30 entraîne un déplacement simultané des deux protecteurs mobiles 40. Comme illustré sur la figure 4, les protecteurs ont une forme identique aux couronnes 20, dans une vue selon l'axe X de l'outillage, à savoir une forme annulaire, et possédant une pluralité de saillies radiales de protecteur 44 sur leur périphérie interne. Les protecteurs mobiles 40 sont respectivement adjacents aux couronnes 20, et sont situés au-dessus de celles-ci, selon l'axe X de l'outillage. Lorsque que l'outillage se déplace, les protecteurs mobiles et les couronnes se déplacent simultanément en un seul et même bloc. Ainsi, l'ensemble formé par les couronnes 20 et les protecteurs mobiles 40 forme une pièce annulaire possédant une pluralité de saillies radiales sur sa périphérie interne. Ces saillies radiales ont la forme et les dimensions des alvéoles devant être usinées sur chaque étage du disque 1.

Par ailleurs, les protecteurs mobiles 40 comportent une pluralité de passages d'injection de fluide 42, comportant chacun une portion de passage radiale 42a, et une portion de passage axiale 42b, communiquant entre elles. La portion de passage radiale 42a est disposée dans une direction perpendiculaire à l'axe X de l'outillage, la portion de passage axiale 42b est disposée dans une direction parallèle à l'axe X. Les passages d'injection de fluide 42 sont disposés de sorte à alimenter chaque saillie radiale de protecteur 44, chaque portion de passage axiale 42b étant disposée de sorte à déboucher sur chaque saillie 22 des couronnes 20, respectivement adjacente aux saillies radiales 44 des protecteurs mobiles 40, comme le montre la figure 4. Les portions de passage radiales 42a sont disposées de sorte à déboucher, respectivement, sur les passages d'injection 36 du capot 30. Par conséquent, lorsqu'une couronne est en cours d'usinage, elle est alimentée en électrolyte depuis les passages d'injection 36 du capot 30, et via les passages d'injection de fluide 42. L'électrolyte peut alors ruisseler autour des saillies 22 de la couronne, avant d'être évacué. En outre, lorsqu'une couronne en cours d'usinage se déplace selon l'axe X, le protecteur isolant 40 qui lui est adjacent se déplace simultanément en pénétrant dans les alvéoles du disque 1 venant d'être usinées. Ainsi, le protecteur isolant 40 permet de protéger les portions d'alvéoles venant d'être usinées en empêchant l'électrolyte de ruisseler sur ces portions, et ainsi éviter un usinage excessif de ces portions, préservant par conséquent la qualité de l'usinage des alvéoles.

Un protecteur fixe 60 est également disposé sur la périphérie externe du disque 1, entre les deux étages du disque 1. Le protecteur 60 forme une pièce annulaire autour du disque 1. Il peut être composé de deux parties fixées ensemble après leur mise en position sur le disque, afin de faciliter son installation et sa fixation autour de la périphérie externe du disque 1. Le moyen de fixation de ces deux parties peut-être un loquet à levier ou bague de serrage ou tout autre moyen équivalent. Le protecteur 60, pouvant être un isolant électrique, permet de protéger les zones du disque 1 qui ne doivent pas être usinées, en empêchant l'électrolyte de ruisseler sur ces zones. Par ailleurs, le protecteur fixe 60 peut comporter une projection 62 permettant de diriger l'électrolyte vers un passage d'évacuation 38 du capot 30, facilitant ainsi l'évacuation de l'électrolyte et de la matière dissoute. Une bague de serrage 62a permet de positionner et de maintenir les éléments 60 et 62 ensemble. Des joints d'étanchéité 60a sont également disposés autour du protecteur 60, de manière à assurer l'étanchéité de contact entre le capot 30 et le protecteur 60. L'ensemble composé de l'outillage 10, du disque multi-étagé 1 et du protecteur fixe 60 peut également comporter un protecteur fixe supérieur 64, protégeant une partie supérieure du disque 1, située au-dessus de l'étage de diamètre plus faible 1A, en étant fixée sur celle-ci, et un protecteur fixe inférieur 66, protégeant une partie inférieure du disque 1, située sous l'étage de diamètre plus important 1B, en étant fixée autour du disque 1, de la même façon que le protecteur 60. Ces différents protecteurs fixes permettent de protéger des zones du disque 1 qui ne doivent pas être usinées, en empêchant l'électrolyte de ruisseler sur ces zones.

La figure 5 représente une machine à usinage électrochimique 100 comprenant un actionneur 110, pouvant être un vérin à axe vertical, capable de déplacer l'outillage 10 axialement selon un axe X de l'outillage, par rapport au disque multi-étagé.

Un circuit d'électrolyte 120, possédant un réservoir 122, permet d'alimenter les couronnes 20 en électrolyte par un circuit d'alimentation 121, et d'évacuer l'électrolyte par un circuit d'évacuation 125.

Ce circuit 120 comporte notamment une vanne de sélection 124, pouvant passer d'une première position dans laquelle la première couronne uniquement est alimentée en électrolyte, à une deuxième position dans laquelle la deuxième couronne uniquement est alimentée en électrolyte.

Par suite, dans le circuit d'alimentation 121 l'électrolyte est pompé depuis le réservoir 122 par une pompe 123 ; il est alors orienté par la vanne de sélection 124 soit vers les passages d'injection 36 du protecteur 40 supérieur ou soit vers ceux du protecteur 40 inférieur, selon que l'on veut usiner l'étage supérieur 1A ou l'étage inférieur 1B.

L'électrolyte s'écoule alors à travers les passages d'injection de fluide 42 du protecteur 40 utilisé, puis ruissèle sur les saillies 22 de la couronne 20 et l'étage du disque à usiner (étage 1A ou 1B suivant le cas), ce qui réalise progressivement l'usinage de cet étage.

L'électrolyte est enfin évacué par un passage d'évacuation 38 du capot (lors de l'usinage de l'étage 1A), ou par une zone inférieure de l'outillage 10 située sous l'étage de diamètre plus important 1B (lors de l'usinage de l'étage 1B) (circuit d'évacuation 125).

Un circuit électrique 130 permet en outre d'alimenter les couronnes 20 en courant électrique. Ce circuit 130 comporte un commutateur électrique 132 pouvant passer d'une première position dans laquelle la première couronne uniquement est alimentée en courant par une source de courant 135, à une deuxième position dans laquelle la deuxième couronne uniquement est alimentée en courant.

Ainsi, la machine 100 est configurée pour permettre l'usinage du premier étage 1A du disque 1 à l'aide de la première couronne, et l'usinage du deuxième étage 1B à l'aide de la deuxième couronne.

L'usinage du disque se passe de la manière suivante.

Le disque 1 est d'abord placé sur un support 140 constitué par un plateau tournant, permettant au disque de tourner autour de l'axe X. Ainsi, lorsque l'outillage 10 est déplacé en translation selon l'axe X en cours d'usinage par le vérin 110, il suit un mouvement relatif hélicoïdal par rapport au disque 1, permettant d'obtenir la forme des alvéoles souhaitée.

Initialement, l'outillage 10 est positionné de telle sorte que la deuxième couronne soit au voisinage de l'étage de diamètre plus important 1B du disque à usiner. Pour ce faire, la deuxième couronne est placée à une distance de 0,01 à 0,2 mm au-dessus de la surface supérieure de l'étage 1B, selon l'axe X.

L'usinage de l'étage 1B est alors réalisé en commandant simultanément les actions suivantes : La machine 100 déplace l'outillage 10 selon l'axe X par l'actionneur 110 ; le disque 1 est mis en rotation par le plateau tournant 140 ; et la deuxième couronne est alimentée en courant et en électrolyte. Ces actions combinées entraînent l'usinage électrochimique de l'étage 1B. Au cours de cette opération d'usinage, l'alimentation de la première couronne en électrolyte et en courant est coupée. L'usinage des alvéoles de l'étage 1B est terminé lorsque la deuxième couronne a été déplacée en-dessous de la surface inférieure de l'étage 1B selon l'axe X. L'alimentation de la deuxième couronne en électrolyte et en courant est alors coupée.

Dans un deuxième temps, l'outillage 10 est positionné de telle sorte que la première couronne soit au voisinage de l'étage 1A. Pour ce faire, la première couronne est placée à une distance de 0,01 à 0,2 mm au-dessus de la surface supérieure du premier étage 1A, selon l'axe X.

Comme pendant la première phase d'usinage, la machine 100 déplace alors l'outillage 10 selon l'axe X par l'actionneur 110, la première couronne étant dans le même temps alimentée en courant et en électrolyte, de sorte que l'usinage électrochimique de l'étage 1A puisse s'effectuer. Au cours de l'usinage de l'étage 1A par la première couronne, l'alimentation de la deuxième couronne en électrolyte et en courant est coupée. L'usinage des alvéoles de l'étage 1A est terminé lorsque la première couronne a été déplacée en-dessous d'une surface inférieure de l'étage 1A selon l'axe X. L'alimentation de la première couronne en électrolyte et en courant est alors coupée. L'usinage des étages du disque multi-étagé 1 est ainsi terminé.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un outillage, et inversement, toutes les caractéristiques décrites en référence à un outillage sont transposables, seules ou en combinaison, à un procédé.

## Revendications

1. Outillage (10) pour réaliser des alvéoles d'un disque (1) multi-étagé par usinage électrochimique, **caractérisé en ce qu'**il comprend au moins une première et une deuxième couronnes (20) coaxiales suivant un axe de disque, configurées pour servir de cathodes et pour usiner deux étages de diamètres différents du disque (1), chaque couronne ayant une périphérie intérieure comportant une pluralité de saillies radiales (22) d'usinage, les première et deuxième couronnes (20) étant fixées de manière rigide l'une à l'autre.

2. Outillage (10) pour réaliser des alvéoles d'un disque (1) multi-étagé par usinage électrochimique selon la revendication 1, dans lequel les saillies radiales présentent, en vue axiale selon l'axe de disque, une forme de champignon.

3. Outillage (10) pour réaliser des alvéoles d'un disque (1) multi-étagé par usinage électrochimique selon la revendication 1 ou 2, comprenant en outre un capot (30) dans lequel sont fixées les couronnes, ledit capot étant agencé autour des couronnes et configuré pour empêcher des projections radiales d'un électrolyte ruisselant autour des saillies.

4. Outillage (10) pour réaliser des alvéoles d'un disque (1) multi-étagé par usinage électrochimique selon la revendication 3, dans lequel le capot (30) comporte au moins deux parties isolées électriquement l'une de l'autre par un élément isolant (50), sur lesquelles sont fixées respectivement la première et la deuxième couronne.

5. Outillage (10) pour réaliser des alvéoles d'un disque (1) multi-étagé par usinage électrochimique selon la revendication 3 ou 4, comportant en outre au moins deux protecteurs mobiles (40) solidaires dudit capot (30), comportant des passages d'injection de fluide (42) pour injecter un électrolyte sur les saillies (22), lesdits deux protecteurs mobiles (40) étant respectivement adjacents auxdites première et deuxième couronnes (20).

6. Ensemble comportant l'outillage (10) selon l'une quelconque des revendications 1 à 5, le disque (1) multi-étagé, et au moins un protecteur fixe (60) configuré pour être fixé sur le disque (1) et protéger le disque (1) de l'électrolyte.

7. Machine d'usinage électrochimique (100) comportant un support (140) permettant la fixation d'un disque multi-étagé (1), l'outillage (10) selon l'une quelconque des revendications 1 à 5, un actionneur (110) capable d'opérer des déplacements relatifs de l'outillage (10) par rapport au disque (1) fixé sur le support (140), le disque étant au moins en partie à l'intérieur de l'outillage (10) ; un circuit d'électrolyte (120) et un circuit électrique (130) ; la machine (100) étant configurée pour permettre un usinage d'un premier étage (1A) du disque (1) à l'aide de la première couronne, et un usinage d'un deuxième étage (1B) du disque (1) à l'aide de la deuxième couronne, par usinage électrochimique, au cours desdits déplacements.

8. Procédé de réalisation d'alvéoles d'un disque multi-étagé par usinage électrochimique utilisant l'outillage (10) selon l'une quelconque des revendications 1 à 5, le procédé comportant les étapes suivantes :
a) Positionner l'outillage (10) de telle sorte qu'une première desdites au moins deux couronnes (20) soit au voisinage d'un premier étage (1B) du disque à usiner.
b) Usiner le premier étage (1B) du disque par usinage électrochimique en déplaçant l'outillage par rapport au disque selon l'axe de disque.
c) Positionner l'outillage (10) de telle sorte qu'une deuxième desdites au moins deux couronnes (20) soit au voisinage d'un deuxième étage (1A) du disque à usiner.
d) Usiner le deuxième étage (1A) du disque par usinage électrochimique en déplaçant l'outillage par rapport au disque selon l'axe de disque.

9. Procédé de réalisation d'alvéoles d'un disque multi-étagé par usinage électrochimique selon la revendication 8, comportant en outre les étapes suivantes :
- Couper l'alimentation électrique et en électrolyte de la deuxième couronne, lorsque la première couronne est en cours d'usinage pendant l'étape b).
- Couper l'alimentation électrique et en électrolyte de la première couronne, lorsque la deuxième couronne est en cours d'usinage pendant l'étape d).

10. Procédé de réalisation d'alvéoles d'un disque multi-étagé par usinage électrochimique selon la revendication 8 ou 9, dans lequel, à l'étape d'usinage b) et/ou d), le déplacement relatif de l'outillage par rapport au disque est un mouvement hélicoïdal autour de l'axe de disque (1).

## Patentansprüche

1. Werkzeug (10) zur Realisierung von Ausnehmungen einer mehrstufigen Platte (1) durch elektrochemische Bearbeitung, **dadurch gekennzeichnet, dass** es mindestens einen ersten und einen zweiten koaxialen Kranz (20) entlang einer Plattenachse umfasst, die ausgestaltet sind, um als Kathoden zu dienen und um zwei Stufen der Platte (1) mit unterschiedlichem Durchmesser zu bearbeiten, wobei jeder Kranz einen inneren Umfang aufweist, der mehrere radiale Vorsprünge (22) zur Bearbeitung umfasst, wobei der erste und zweite Kranz (20) in Bezug aufeinander starr fixiert sind.

2. Werkzeug (10) zur Umsetzung von Ausnehmungen einer mehrstufigen Platte (1) durch elektrochemische Bearbeitung nach Anspruch 1, wobei die radialen Vorsprünge in axialer Sicht gemäß der Plattenachse eine Pilzform aufweisen.

3. Werkzeug (10) zur Umsetzung von Ausnehmungen einer mehrstufigen Platte (1) durch elektrochemische Bearbeitung nach Anspruch 1 oder 2, das ferner eine Haube (30) umfasst, in der die Kränze fixiert sind, wobei die Haube um Kränze angeordnet und dazu ausgestaltet ist, radiale Spritzer eines Elektrolyten zu verhindern, der um die Vorsprünge strömt.

4. Werkzeug (10) zur Umsetzung von Ausnehmungen einer mehrstufigen Platte (1) durch elektrochemische Bearbeitung nach Anspruch 3, wobei die Haube (30) mindestens zwei Teile umfasst, die voneinander durch ein Isolierelement (50) elektrisch isoliert sind, an denen jeweils der erste und der zweite Kranz fixiert sind.

5. Werkzeug (10) zur Umsetzung von Ausnehmungen einer mehrstufigen Platte (1) durch elektrochemische Bearbeitung nach Anspruch 3 oder 4, das ferner mindestens zwei fest verbundene bewegliche Schutzeinrichtungen (40) der Haube (30) umfasst und Fluideinspritzkanäle (42) zum Einspritzen eines Elektrolyten auf die Vorsprünge (22) umfasst, wobei die zwei beweglichen Schutzeinrichtungen (40) jeweils an den ersten und zweiten Kranz (20) angrenzen.

6. Einheit, die das Werkzeug (10) nach einem der Ansprüche 1 bis 5, die mehrstufige Platte (1) und mindestens eine feste Schutzeinrichtung (60) umfasst, die dazu ausgestaltet ist, an der Platte (1) fixiert zu sein und die Platte (1) vor dem Elektrolyten zu schützen.

7. Maschine zur elektrochemischen Bearbeitung (100), umfassend eine Stütze (140), welche die Fixierung einer mehrstufigen Platte (1) ermöglicht, das Werkzeug (10) nach einem der Ansprüche 1 bis 5, ein Stellglied (110), das dazu in der Lage ist, relative Verschiebungen des Werkzeugs (10) in Bezug auf die Platte (1) vorzunehmen, die an der Stütze (140) fixiert ist, wobei sich die Platte zumindest teilweise im Inneren des Werkzeugs (10) befindet, einen Elektrolytkreislauf (120) und eine elektrische Schaltung (130), wobei die Maschine (100) dazu ausgestaltet ist, eine Bearbeitung einer ersten Stufe (1A) der Platte (1) mithilfe des ersten Kranzes und eine Bearbeitung einer zweiten Stufe (1B) der Platte (1) mithilfe des zweiten Kranzes durch elektrochemische Bearbeitung im Verlauf der Verschiebungen zu ermöglichen.

8. Verfahren zur Umsetzung von Ausnehmungen einer mehrstufigen Platte durch elektrochemische Bearbeitung unter Verwendung des Werkzeugs (10) nach einem der Ansprüche 1 bis 5, wobei das Verfahren die folgenden Schritte umfasst:
a) Positionieren des Werkzeugs (10), sodass sich ein erster der mindestens zwei Kränze (20) neben einer ersten Stufe (1B) der zu bearbeitenden Platte befindet.
b) Bearbeiten der ersten Stufe (1B) der Platte durch elektrochemische Bearbeitung, indem das Werkzeug in Bezug auf die Platte gemäß der Plattenachse verschoben wird.
c) Positionieren des Werkzeugs (10), sodass sich ein zweiter der mindestens zwei Kränze (20) neben einer zweiten Stufe (1A) der zu bearbeitenden Platte befindet.
b) Bearbeiten der zweiten Stufe (1A) der Platte durch elektrochemische Bearbeitung, indem das Werkzeug in Bezug auf die Platte gemäß der Plattenachse verschoben wird.

9. Verfahren zur Umsetzung von Ausnehmungen einer mehrstufigen Platte durch elektrochemische Bearbeitung nach Anspruch 8, das ferner die folgenden Schritte umfasst:
- Unterbrechen der Stromversorgung und der Versorgung mit dem Elektrolyten des zweiten Kranzes, während der erste Kranz in Schritt b) bearbeitet wird.
- Unterbrechen der Stromversorgung und der Versorgung mit dem Elektrolyten des ersten Kranzes, während der zweite Kranz in Schritt d) bearbeitet wird.

10. Verfahren zur Umsetzung von Ausnehmungen einer mehrstufigen Platte durch elektrochemische Bearbeitung nach Anspruch 8 oder 9, wobei in dem Bearbeitungsschritt b) und/oder d) die relative Verschiebung des Werkzeugs in Bezug auf die Platte eine schraubenförmige Bewegung um die Plattenachse (1) ist.

## Claims

1. Tooling (10) for making slots in a multistage disk (1) by electrochemical machining, **characterized in that** it comprises at least a first ring (20) and a second ring (20), each arranged coaxially about an axis of the disk, and configured to act as a cathode for machining a respective one of two stages of different diameters of the disk (1), each ring having an inside periphery with a plurality of radial machining projections (22), the first and second rings (20) being rigidly secured to each other.

2. Tooling (10) for making slots in a multistage disk (1) by electrochemical machining according to claim 1, wherein the radial projections are mushroom-shaped when seen axially along the axis of the disk.

3. Tooling (10) for making slots in a multistage disk (1) by electrochemical machining according to claim 1 or claim 2, further comprising a cover (30) in which the rings are secured, said cover being arranged around the rings and being configured to prevent the electrolyte that runs around the projections from being projected radially.

4. Tooling (10) for making slots in a multistage disk (1) by electrochemical machining according to claim 3, wherein the cover (30) includes at least two portions that are electrically insulated from each other by an insulator element (50), the first and second rings being secured to respective ones of the portions.

5. Tooling (10) for making slots in a multistage disk (1) by electrochemical machining according to claim 3 or claim 4, further including at least two movable protectors (40) secured to said cover (30), including fluid injection passages (42) for injecting electrolyte onto the projections (22), said two movable protectors (40) being adjacent to respective ones of said first and second rings (20).

6. An assembly comprising: the tooling (10) according to any one of claims 1 to 5; the multistage disk (1); and at least one stationary protector (60) configured to be secured on the disk (1) and to protect the disk (1) from the electrolyte.

7. A machine (100) for electrochemical machining comprising: a support (140) enabling a multistage disk (1) to be secured thereto; the tooling (10) according to any one of claims 1 to 5; an actuator (110) capable of imparting relative movements between the tooling (10) and the disk (1) secured to on the support (140), the disk being at least in part inside the tooling (10); an electrolyte circuit (120); and an electrical circuit (130); the machine (100) being configured to enable a first stage (1A) of the disk (1) to be machined using the first ring, and a second stage (1B) of the disk (1) to be machined using the second ring, by electrochemical machining, during said movements.

8. A method of making slots in a multistage disk by electrochemical machining using the tooling (10) according to any one of claims 1 to 5, the method comprising the following steps:
a) positioning the tooling (10) in such a manner that a first of said at least two disks (20) is in the vicinity of the first stage (1B) of the disk that is to be machined;
b) machining the first stage (1B) of the disk by electrochemical machining by moving the tooling relative to the disk along the axis of the disk;
c) positioning the tooling (10) in such a manner that a second of said at least two disks (20) is in the vicinity of the second stage (1A) of the disk that is to be machined; and
d) machining the second stage (1A) of the disk by electrochemical machining by moving the tooling relative to the disk along the axis of the disk.

9. A method of making slots in a multistage disk by electrochemical machining according to claim 8, the method further comprising the following steps:
• disconnecting the supplies of electricity and electrolyte to the second ring while the first ring is being machined during step b); and
• disconnecting the supplies of electricity and electrolyte to the first ring while the second ring is being machined during step d).

10. A method of making slots in a multistage disk by electrochemical machining according to claim 8 or claim 9, wherein during machining step b) and/or d), the movement of the tooling relative to the disk is helical movement about the axis of the disk (1).
